# EUROPÄISCHE PATENTANMELDUNG

(11) **EP 0 978 586 A2**
(43) Veröffentlichungstag der Anmeldung: **09.02.2000**
(21) Anmeldenummer: 99114283.7
(22) Anmeldetag: 29.07.1999
(51) Int. Cl.: D06M 15/643

(54) **Wässrige Mikroemulsionen, enthaltend Organopolysiloxane**

(30) Priorität: 04.08.1998 DE 19835227
(71) Anmelder: Rudolf GmbH & Co. KG Chemische Fabrik, 82538 Geretsried (DE)
(72) Erfinder: Sandner, Bernhard, 82538 Geretsried (DE); Werner, Kurt, 82538 Geretsried (DE); Schedlowski, Christina, 82544 Egling (DE)
(74) Vertreter: Zumstein, Fritz, Dr.

(57) **Zusammenfassung**

Die vorliegende Erfindung beschreibt wäßrige Mikroemulsionen, enthaltend Organopolysiloxane der Typen

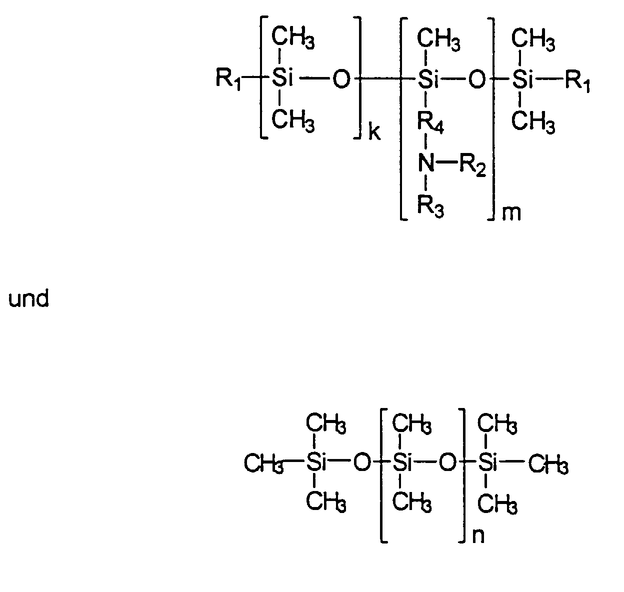

Emulgatoren, organische oder anorganische Säure und ggf. ein Hydrotropikum, deren Herstellung sowie deren Verwendung.

## Beschreibung

Aminogruppen enthaltende Organopolysiloxane werden schon seit längerer Zeit als Textilausrüstungsmittel eingesetzt. Bei den so behandelten Textilien werden dadurch Weichgriffeffekte erreicht. Bevorzugt verwendet man Organopolysiloxane mit den aminofunktionellen Gruppen
-(CH₂)₃NH₂ und/oder -(CH₂)₃NHCH₂CH₂NH₂

Dies ist beispielsweise in der US-A 4 098 701 beschrieben. Weiterhin wird in der EP-A 0 441 530 der Ersatz der Aminoethylaminopropylgruppe durch die N-Methyl-piperazinogruppe und in der EP-A 0 342 830 die Umsetzung von aminoethylaminopropylgruppenhaltigen Organopolysiloxanen mit Butyrolacton empfohlen.

Die genannten Organopolysiloxane mit aminofunktionellen Gruppen müssen vor ihrer Applikation bei der Textilausrüstung mit erheblichem Aufwand in die Form einer wäßrigen Emulsion überführt werden. Dies kann durch verschiedene bekannte Verfahren geschehen, z.B. wie in EP-A 0 358 652 beschrieben, durch Erhitzen einer Mischung von mit Säure neutralisiertem aminogruppenhaltigem Organopolysiloxan, Wasser und Emulgator oder gemäß WO 94/14877 auch mit anderen Organopolysiloxanen. Gemäß dem in EP-A 0138 192 beschriebenen Verfahren erreicht man dieses Ziel durch Scheremulgierung in konzentrierter, wenig Wasser enthaltender Form, indem man von den Grundstoffen aminogruppenhaltiges Organopolysiloxan in neutralisierter Form, Emulgator und Wasser ausgeht.

Die nach diesen bekannten Verfahren hergestellten Mikroemulsionen können aufgrund ihrer Feinteiligkeit während der Applikation auf textilen Substraten aus nativen Fasern, insbesondere aus Baumwolle, auch in die Fibrillarstruktur des Faserinneren eindringen und eine über den Faserquerschnitt gleichmäßige Verteilung des weichgriffgebenden Silikons erzeugen. Diese als 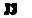 innere Weichheit" bezeichnete Eigenschaft kann aus diesem Grunde nur durch solche aminogruppenhaltigen Mikroemulsionen erhalten werden.

Demgegenüber besitzen Dimethylpolysiloxanöle keine solchen funktionellen Gruppen, die selbstemulgierende Eigenschaften des Organopolysiloxanes bewirken können. Daher kann man aus ihnen keine **Mikro**emulsionen, sondern nur **Makro**emulsionen mit Teilchengrößen größer als ca. 50 nm herstellen. Zur Emulsionsbildung müssen dabei, um ausreichend stabile Emulsionen zu erzielen, mechanische, starke Scherkräfte erzeugende Hilfsmittel wie z.B. ein nach dem Rotor/Statorprinzip arbeitendes Mischaggregat (z.B. Ultra-Turrax) oder Hochdruckhomogenisiermaschinen verwendet werden. Die Herstellung von Sekundäremulsionen unter Verwendung von Homogenisatoren ist Stand der Technik (siehe z.B. Römpp, Chemielexikon, 9. Auflage 1990, Band 3, Seite 1845) und ist wegen des je nach Maschinentyp zum Teil hohen Energieaufwandes mit erheblichen Kosten verbunden.

Die Emulsionpartikel von **Makro**emulsionen aus Dimethylpolysiloxan werden bei der Anwendung auf nativen und cellulosischen Substraten durch Filtrationseffekte bevorzugt auf der Faseroberfläche abgelagert Durch die dabei rohrförmig auf der Faseroberfläche erzeugte erhöhte Silikonkonzentration entsteht dort eine verbesserte Glätte und somit eine erhöhte Gleitfähigkeit, wohingegen die Weichgriffeigenschaften nicht im selben Ausmaß wie durch die (auch ins Faserinnere eindringenden) **Mikro**emulsionen aus aminogruppenhaltigen Organopolysiloxanen verbessert werden.

Die Verfahren zur Modifikation von Organopolysiloxanen mit Aminogruppen stellen einen technisch nicht unproblematischen und aufwendigen Prozeß dar. Die einzelnen Syntheseschritte sind teilweise aufgrund der aggressiven und toxischen Eigenschaften der Ausgangsmaterialien nur in besonders ausgestatteten und geschützten Anlagen durchführbar. Hieraus erklären sich die im Vergleich zu Dimethylpolysiloxanen üblicherweise deutlich höheren Kosten für die aminogruppenhaltigen Organopolysiloxane.

Andererseits können die wesentlich kostengünstigeren (aus den oben beschriebenen Gründen aber nicht zu Mikroemulsionen verarbeitbaren) Dimethylpolysiloxane nicht für die üblichen Einsatzwecke solcher Mikroemulsionen verwendet werden.

Gemäß dem oben beschriebenen Stand der Technik ist zur Herstellung feinteiliger Emulsionen stets die Gegenwart aminogruppenhaltiger Organopolysiloxane Voraussetzung, welche aufgrund ihrer Dissoziationsfähigkeit unter sauren Bedingungen dem Organopolysiloxan inhärente Emulgiereigenschaften verleihen. Dimethylpolysiloxane ohne Aminofunktionen lassen sich unter gleichartigen Emulgierbedingungen nicht zu feinteiligen Emulsionen mit Teilctengrößen kleiner als 15 nm verarbeiten, sondern werden ausschließlich als milchige Sekundäremulsionen erhalten. Dabei muß die für ausreichend stabile Emulsionen notwendige Feinteiligkeit durch Verwendung mechanischer, starke Scherkräfte erzeugender Hilfsmittel, wie z.B. einem nach dem Rotor/Statorprinzip arbeitenden Mischaggregat (z.B. Ultra-Turrax), erzeugt werden. Auch Hochdruckhomogenisiermaschinen werden für diesen Zweck eingesetzt.
Alle mechanische Emulgierverfahren sind wegen des hohen Energieaufwandes, wegen einer teilweise komplizierten und aufwendigen Apparatekonstruktion sowie einer wegen langer Anlagebelegzeiten schlechten Anlagenausnutzung mit erhöhtem Kostenaufwand verbunden.

Um die vorteilhaften technologischen Eigenschaften der aus aminogruppenhaltigen Organopolysiloxanen hergestellten **Mikro**emulsionen mit den anwendungstechnisch etwas andersgearteten und kostengünstigeren **Makro**emulsionen aus Dimethylpolysiloxan zu vereinen, wäre an sich eine einfache Mischung der Emulsionen aus den beiden Ausgangskomponenten denkbar. Dies scheitert jedoch, wie Versuche zeigen, an der Instabilität solcherart hergestellter Mischungen, welche bereits nach sehr kurzer Zeit eine Phasentrennung zeigen.

Hieraus ergeben sich für den Praktiker unakzeptable Effektschwankungen auf den ausgerüsteten textilen Substraten.

Aufgabe der vorliegenden Erfindung war daher die Bereitstellung von **Mikro**emulsionen aus modifizierten Organopolysiloxanen und Dimethylpolysiloxanen, welche die vorteilhaften technologischen und anwendungstechnischen Eigenschaften der beiden Ausgangskomponenten auf textilen Substraten in sich vereinigen. Eine weitere Aufgabe war es, ein Herstellungsverfahren zu finden, mit welchem diese Emulsionen auf möglichst einfache Weise unter Vermeidung der technologisch aufwendigen Formulierungsverfahren für Makroemulsionen aus Dimethylpolysiloxan hergestellt werden können.

Es wurde nun überraschenderweise gefunden, daß die nachstehend beschriebenen, erfindungsgemäßen Mikroemulsionen, bestehend aus Aminogruppen tragenden Organopolysiloxanen und Dimethylpolysiloxanen, Emulgatoren, einer zur pH-Einstellung zugesetzten anorganischen oder organischen Säure sowie ggf. einem Hydrotropikum hervorragende Verbesserungen im Weichgriffverhalten und der Oberflächenglätte der damit ausgerüsteten textilen Substrate gegenüber dem Stand der Technik aufweisen, sowie aufgrund des einfachen Herstellungsverfahrens und der Mitverwendung der kostengünstigen Dimethylpolysiloxane auch ökonomische Vorteile bieten. Ein weiterer Vorteil der erfindungsgemäß hergestellten Mikroemulsionen ist das gegenüber einer klassischen Mikroemulsion aus aminogruppenhaltigem Organopolysiloxan deutlich günstigere Stabilitätsverhalten der daraus hergestellten Anwendungsflotten bei Scherbeanspruchungen, wie sie auf den in der Textilindustrie für die Ausrüstung von Maschenware verwendeten Veredelungsmaschinen, insbesondere den Jets auftreten können. Weiterhin ist als erheblicher Vorteil die Beständigkeit gegenüber den aus verschiedensten Ursachen gelegentlich in den Anwendungsflotten auftretenden erhöhten pH-Werten zu nennen.
Bringt man die Mikroemulsionen dieser erfindungsgemäßen Aminogruppen tragenden Organopolysiloxane und Dimethylpolysiloxane in üblicher Konzentration und Applikationsweise auf textile Substrate auf, so weisen diese nicht nur einen hervorragend weichen und angenehmen Griff auf. Darüber hinaus wird die Oberflächenglätte deutlich erhöht. Gleichzeitig kann mit den erfindungsgemäßen Mikroemulsionen die häufig gewünschte Kombination eines besonders eleganten, vollen Warengriffes mit hoher innerer Weichheit erzielt werden, wobei der den herkömmlichen Mikroemulsionen aus nur aminogruppenhaltigen Organopolysiloxanen eigene hervorragende Weichgriff sogar noch übertroffen wird.

Als weiterer Vorteil ist hervorzuheben, daß eine deutliche Verbesserung der Hydrophilie der damit ausgerüsteten textilen Substrate resultiert, welche durch Anwendung der herkömmlichen Mikroemulsionen, hergestellt nur aus aminogruppenhaltigen Organopolysiloxanen, üblicherweise negativ beeinflußt wird. Dieser Vorteil kommt insbesondere bei der Anwendung auf Frottierartikeln, wie z.B. Badebekleidung und Handtüchern etc. zur Geltung und ist auf die Verteilung der hinsichtlich Hydrophilie sich günstiger verhaltenden Dimethylpolysiloxane über den gesamten Faserquerschnitt hinweg zurückzuführen.

Die mit den erfindungsgemäßen Emulsionen ausgerüsteten, gebleichten oder in hellen Pastelltönen gefärbten, textilen Materialien zeigen nur eine geringe Vergilbung durch die während der im Veredelungsprozeß angewendeten erhöhten Temperaturen. Diese Eigenschaft ist von großer Bedeutung, da eine Vergilbung der Basisausrüstung sehr leicht zu Verschiebungen des gewünschten Farbtones oder bei sehr brillanten Färbungen zu Farbverschleierungen führen kann.

Ein Nachteil der gemäß Stand der Technik hergestellten Mikroemulsionen ist die Tatsache, daß in diesen die Emulsionsviskosität mit zunehmender Konzentration an Silikon und Begleitstoffen üblicherweise exponentiell ansteigt. Häufig müssen daher zur Verringerung der Viskosität als Hilfsstoffe Elektrolyte, wie z.B. Natriumchlorid oder Natriumsulfat, eingesetzt werden, welche als Nachteil eine agglomerisationsbedingte Partikelvergrößerung und damit eine Eintrübung der Emulsion zur Folge haben können. Wie in USP 5,234,495 beschrieben ergibt sich hieraus häufig eine Instabilität der Emulsionen, welche zum Aufrahmen oder sogar zur Phasentrennung führen kann.

Als weitere Hilfstoffgruppe zur nötigen Viskostitätsminderung im Stand der Technik kommen Lösemittel wie z.B. niedrige Alkohole oder Ketone in Frage. Durch Zusatz dieser brennbaren Stoffe wird jedoch stets ein Flammpunkt und damit eine entsprechende Kennzeichnungspflicht der so hergestellten Emulsionen verursacht. Hinzu kommt die Erhöhung der Emissionen während des Trocknungsprozesses, bedingt durch die Anteile an leicht flüchtigen, kohlenstoffhaltigen Substanzen in der Abluft der Trocknungsaggregate in den Veredelungsbetrieben.
Als überraschend hat sich herausgestellt, daß die Silikonkonzentrationen in den erfindungsgemäß hergestellten Mikroemulsionen deutlich höher sein können, ohne daß Hilfsstoffe zur Reduktion der Viskosität benötigt werden.

Der erste Gegenstand der Erfindung sind nun wäßrige Mikroemulsionen, gekennzeichnet durch einen Gehalt, bezogen auf die Gesamtzusammensetzung, an
(1) 2 bis 60 Gewichtsprozent eines aminofunktionelle Gruppen tragenden Organopolysiloxans des Typs 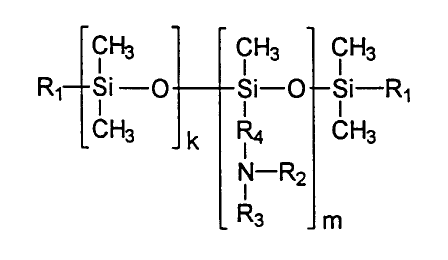 worin
   - R₁: einen Hydroxy-, Methoxy-, Ethoxy- oder Methylrest,
   - R₂: Wasserstoff oder einen Alkylenaminrest -R₅-NR₆R₇,
   - R₃, R₆ und R₇: Wasserstoff oder einen geradkettigen oder verzweigten aliphatischen Alkylrest mit C₁ bis C₂₂ oder Cycloalkylrest mit C₄ bis C₈ oder einen Acyl- oder Hydroxiacylrest mit C₂ bis C₆,
   - R₄ und R₅: einen geradkettigen oder verzweigten Alkylenrest mit C₂ bis C₂₂ bedeuten,
   die Summe von **k** und **m** 25 bis 900 ist, wobei die aminogruppenhaltigen Einheiten innerhalb des Organopolysiloxanes statistisch verteilt sein können und wobei der Stickstoffgehalt dieser Komponente (1) 0,1 bis 2,5 Gewichtsprozent, bezogen auf die Komponente (1) beträgt,
(2) 2 bis 60 Gewichtsprozent eines Dimethylpolysiloxans des Typs 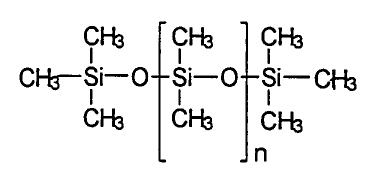 worin
   - **n**: 25 bis 900 bedeutet,
(3) 2 bis 40 Gewichtsprozent eines Emulgators,
(4) 0,2 bis 10 Gewichtsprozent organische oder anorganische Säure,
(5) 20 bis 93,8 Gewichtsprozent Wasser,
und (6) 0 bis 15 Gewichtsprozent eines Hydrotropikums.

Sämtliche Gewichtsangaben der erfindungsgemäßen Emulsionen beziehen sich auf die Gesamtzusammensetzung der erfindungsgemäßen Emulsion. Als bevorzugte Bereiche sind für die Komponente (1) ein Bereich von 5 - 50, insbesondere 10 - 40 Gewichtsprozent; für die Komponente (2) 4 - 30, insbesonbesondere 10 - 40 Gewichtsprozent; für die Komponente (2) 4 - 30, insbesondere 4 - 20 und für die Komponente (3) 4 - 30, insbesondere 6 - 20 Gewichtsprozent zu nennen. Der Anteil der Komponente (4) ist bevorzugt im Bereich von 0,3 - 5, insbesondere im Bereich von 0,3 - 2 Gewichtsprozent. Sofern die Komponente (6) zugesetzt wird, liegt deren Konzentration bevorzugt im Bereich von 1 - 10, insbesondere von 3 - 8 Gewichtsprozent.

R₄ und R₅ haben bevorzugt 2 - 8 Kohlenstoffatome, insbesondere jedoch 2 - 4 Kohlenstoffatome im Rest. Liegen R₃, R₆ und R₇ als Alkylreste vor, so bestehen sie insbesondere aus 2 - 12, bevorzugt aus 2 - 4 Kohlenstoffatomen. Cycloalkylreste haben bevorzugt 4 - 6 und Acyl- oder Hydroxiacylreste bevorzugt 2 -4 Kohlenstoffatome.

Die Summe von **k** und **m** liegt vorzugsweise im Bereich von 25 - 700, insbesondere jedoch zwischen 25 und 500. Bei einer Summe von **k** und **m** im Bereich von 25 - 700 resultieren im allgemeinen Viskositäten im ungefähren Bereich von 100 - 100000 mPas.
Der Stickstoffgehalt der Komponente (1) liegt bevorzugt bei 0,1 - 2 Gewichtsprozent, insbesondere jedoch bei 0,1 - 0,8 Gewichtsprozent bezogen auf die Gesamtzusammensetzung von Komponente (1).
**n** liegt vorzugsweise im Bereich von 25 - 700, insbesondere jedoch zwischen 25 und 500. Bei einem Wert von **n** im Bereich von 25 - 700 resultieren im allgemeinen Viskositäten im ungefähren Bereich von 100 - 50000 mPas.

Als Emulgatoren (Komponente (3)) können solche auf anionischer, kationischer, nichtionogener oder amphoterer Basis oder Mischungen dieser Verbindungen eingesetzt werden.
Als Beispiele für anionische Emulgatoren sind die sulfonierten Mineralöle und Alkylarylsulfosäuren, sulfatierte natürliche Öle, Carboxylate, Tauride und Phosphorsäureester und die sulfatierten nichtionogenen Tenside sowie deren Ammonium-, Amin,- Alkali- und Erdalkalisalze zu erwähnen.
Als Beispiele für kationische Emulgatoren sind Fettamine, Polyalkylenpolyamine sowie N-alkylmodifizierte Fettamine, jeweils in ethoxilierter Form mit 2 bis 50 Molekülen (vorzugsweise mit 8 bis 15 Molekülen) angelagertem Ethylenoxid, gegebenenfalls in Form ihrer Salze zu nennen.
Sofern die Komponente (3) ein nichtionisches Tensid darstellt, handelt es sich vorzugsweise um Ethoxilierungsprodukte aliphatischer Alkohole mit 6 bis 22 Kohlenstoffatome, die bis zu 50 Mol Etylenoxid angelagert enthalten. Die Alkohole können bevorzugt 8 bis 16 Kohlenstoffatome enthalten; sie können gesättigt, linear oder vorzugsweise verzweigt sein und können allein oder in Mischung zur Anwendung gelangen. So können Alkohole, wie z.B. 2,6,8-Trimethyl-4-nonanol oder Isotridecylalkohol verwendet werden. Gut geeignet sind auch hydrophil modifizierte Organopolysiloxane, welche 2 bis 20 Gewichtsprozent Seitengruppen mit 2 bis 30, insbesondere 4 bis 15, besonders bevorzugt jedoch 5 bis 10 Moleküle angelagertes Ethylenoxid tragen.
Von besonderem Vorteil hinsichtlich niedriger Schaumentwicklung in den Anwendungsflotten und daher besonders bevorzugt sind Alkohole oder Organopolysiloxane der erwähnten Zusammensetzung, wenn deren Alkylenoxidrest aus Ethylenoxid und 1,2-Propylenoxid in statistischer Verteilung und vorzugsweise in blockartiger Verteilung aufgebaut ist.
Gut geeignet sind auch Emulgatoren aus der Gruppe der Estercarbonsäuren, wie sie z.B. durch Carboximethylierung von Ethoxilaten mit dem Natriumsalz der Chloressigsäure basenkatalysiert gewonnen werden können. So eignen sich z.B. gut die Ethercarbonsäuren, deren Alkylrest zwischen 2 und 10 Kohlenstoffatome, bevorzugt 4 bis 8 Kohlenstoffatome enthält und mit 2 - 15 Molekülen Ethylenoxid, bevorzugt mit 2 - 8 Molekülen Ethylenoxid umgesetzt ist. Für Anwendungsbereiche, in welchen eine Schaumentwicklung nicht störend ist, insbesondere z.B. bei Schaum- oder Sprühauftragsverfahren sind Emulgatoren auf Basis von Alkylpolyglucosiden von besonderem Vorteil, wobei insbesondere Umsetzungsprodukte mit vorwiegend Alkylmonoglucosid im Gemisch mit geringeren Anteilen der entsprechenden Alkyldiglucoside bevorzugt sind.

Nichtionogene Emulgatoren aus der Gruppe der ethoxilierten, verzweigten aliphatische Alkohole sind aufgrund ihrer günstigen Gesamteigenschaften ganz besonders bevorzugt. Deshalb werden z.B. Ethoxilate des 2,6,8-Trimethyl-4-nonanols oder des Isotridecylalkoholes mit jeweils 2 bis 50 Molekülen, insbesondere 3 bis 15 Molekülen angelagertem Ethylenoxid für die Herstellung der erfindungsgemäßen Emulsionen bevorzugt.

Die gegebenenfalls vorhandene Komponente (6), ein organisches Hydrotropikum, kann üblicherweise aus der Gruppe der polyfunktionellen Alkohole ausgewählt werden. So können Dialkohole mit 2 - 10, bevorzugt 2 - 6, insbesondere jedoch 2 - 4 Kohlenstoffatomen pro Molekül eingesetzt werden. Gut geeignet sind auch deren Mono- und Diether sowie die Mono- und Diester dieser Dialkohole. In Fällen, wo spezielle trockene Oberflächengriffe der damit ausgerüsteten Textilien gewünscht werden, kann als Komponente (6) auch Polyethylenglykol mit 25 - 250, vorzugsweise 10 - 150, insbesondere jedoch 15 - 30 Ethylenoxidgruppen im Molekül verwendet werden. Ist hingegen ein feuchter, schmieriger Oberflächengriff auf den damit ausgerüsteten Textilien gewünscht, so empfiehlt sich die Verwendung von Glycerin oder dessen Anlagerungsprodukten mit 1 - 20, vorzugsweise 2 - 10, insbesondere jedoch 3 - 6 Ethylenoxidresten pro Molekül, statistisch verteilt auf die drei Hydroxigruppen.
Als besonders bevorzugt zu verwendende Beispiele für die Komponente (6) sind Polyethylenglykol 600, Polyethylenglykol 1000, 1,2-Propylenglykol und Dipropylenglykol zu nennen.

Als Komponente (4) können sowohl organische als auch anorganische Säuren Verwendung finden. So werden z.B. als organische Säuren Ameisensäure, Essigsäure oder Glykolsäure, als mehrbasige Säuren z.B. Oxalsäure, Zitronensäure oder Ascorbinsäure benutzt. Für Fälle, wo ein Geruch nach organischen Säuren stört, kann insbesondere Milchsäure oder alternativ eine anorganische Säure, wie z.B. Salzsäure, Schwefelsäure oder Phosphorsäure eingesetzt werden. Vorteilhafterweise findet für die Anpassung des pH-Wertes auf den gewünschten Wert Essigsäure Verwendung.

Die erfindungsgemäßen Mikroemulsionen sind bevorzugt frei von Hilfsstoffen aus der Gruppe der anorganischen Elektrolyte und aus der Gruppe der leicht flüchtigen, brennbaren organischen Lösemittel.

Ein weiterer Gegenstand der Erfindung ist die Herstellung der Mikroemulsionen gemäß Anspruch 1, wobei man durch Mischen der Komponenten (1), (2) und (3) bei Temperaturen von 20 - 70°C eine Mischung (A) herstellt und wobei man ferner durch Mischen der Komponenten (4), (5) und gegebenenfalls (6) bei Temperaturen von 20 - 90°C eine separate Mischung (B) herstellt und wobei man anschließend die beiden separat hergestellten Mischungen (A) und (B) bei Temperaturen von 20 - 90°C verrührt und auf Temperaturen unterhalb 35°C abkühlt.

Die Herstellung der Mischung (A) aus den Komponenten (1), (2) und (3) kann bei Temperaturen von 20 - 70°C, bevorzugt im Bereich von 30 - 50°C erfolgen. Die Herstellung der Mischung (B) aus den Komponenten (4), (5) und gegebenenfalls (6) wird bei Temperaturen von 20 - 90°C, bevorzugt bei 50 - 85°C vorgenommen.
Die Herstellung der erfindungsgemäßen Emulsionen durch Verrühren der beiden Mischungen (A) und (B) erfolgt bei Temperaturen zwischen 20 und 90°C unter gleichmäßiger Durchmischung. Bevorzugt werden Temperaturen von 40 bis 85°C; besonders zu bevorzugen ist ein Temperaturbereich von 50 - 85°C. Dabei spielt es keine Rolle, ob die Mischung (A) in die Mischung (B) eingetragen wird oder umgekehrt. Das Verrühren der Mischungen (A) und (B) kann während 0,1 bis 24 Stunden, bevorzugt während 0,2 bis 5 Stunden durchgeführt werden.
Nach dem Verrühren erfolgt eine Abkühlung auf Temperaturen unterhalb 35°C, bevorzugt im Bereich von 20 - 30°C.

Die Zeiten bis zur Bildung der erfindungsgemäßen Emulsionen sind abhängig von den angewendeten Temperaturen. Bei niedrigeren Temperaturen sind demnach vorzugsweise Zeiten von 1 - 5 Stunden anzuwenden, während bei erhöhten Temperaturen naturgemäß kürzere Behandlungszeiten, insbesondere zwischen 0,1 - 1 Stunden ausreichen.

Je nach angewendeten Komponenten und Herstellungsbedingungen erhält man Emulsionen, welche in ihrem Erscheinungsbild für den Fachmann als typische, wasserklare Mikroemulsionen mit einer durchschnittlichen Teilchengrößenverteilung von kleiner als 15 nm liegen. Es können auch Emulsionen mit einem erweitertem Teilchengrößenspektrum erhalten werden, welche dann einen transparenten Charakter aufweisen. Die Durchmischung kann mit Hilfe der dem Fachmann hinlänglich bekannten Mischaggregate erfolgen, wobei jedoch bevorzugt in einem gegen die Atmosphäre abgeschlossenem Rührbehälter mit wandgängigen Rührern gearbeitet wird.

Weiterer Gegenstand der Erfindung ist die Verwendung der Mikroemulsionen gemäß Anspruch 1 bei der Veredelung textiler Substrate in wäßrigen Bädern und Anwendungsflotten.

Besonders zu erwähnen ist hier die Zwangsapplikation durch Klotzen bei der Anwendung auf dem Foulard, wobei sowohl nach dem Trocken-in-Naß- als auch nach dem Naß-in-Naßverfahren gearbeitet werden kann. Auch Sprüh- oder Schaumapplikationsverfahren sind für den Auftrag der Emulsionen gut geeignet. Hervorzuheben ist weiterhin die hervorragende Eignung der erfindungsgemäßen Emulsionen für die Anwendung im Ausziehverfahren z.B. auf der Haspelkufe, wenn dimensionsinstabile Maschenwaren auszurüsten sind. Dieses Verfahren kann auch auf den schnellaufenden Textilveredelungsmaschinen, wie z.B. auf den Jets durchgeführt werden, wobei hier die hervorragende Emulsionsstabilität besonders zum Tragen kommt.

Bei allen Applikationsverfahren ist hervorzuheben, daß mit den erfindungsgemäßen Emulsionen ausgerüstete, gebleichte textile Materialien nur eine vernachlässigbare Vergilbung durch die während der thermischen Beanspruchung angewendeten erhöhten Temperaturen erleiden. Diese Eigenschaft ist nicht nur bei rein weißen textilen Substraten von großer Bedeutung, sondern wirkt sich sehr vorteilhaft auch bei gefärbten Artikeln aus, insbesondere wenn es sich um Färbungen in hellen Pastelltönen handelt Eine Vergilbung der Basisausrüstung kann hier sehr leicht zu Verschiebungen des gewünschten Farbtones oder bei sehr brillanten Färbungen sogar zu Farbverschleierungen führen.

Neben diesen genannten vorteilhaften Eigenschaften weisen die erfindungsgemäßen Emulsionen während der Anwendung auch beim Auftreten von pH-Werten bis zu 9 eine gute Stabilität auf mit der Folge, daß nur bei gleichzeitiger Summierung extrem ungünstiger Bedingungen, z.B. bei gleichzeitig auftretendem sehr hohen pH-Wert, und/oder sehr hohen Flottentemperaturen und/oder sehr hohen Scherbeanspruchungen, wie sie z.B. auf schnell laufenden Textilveredelungsmaschinen auftreten können, eine geringe Entmischung auftritt.

Auf Textilveredelungsmaschinen wie z.B. den Jets, wird üblicherweise aufgrund der hohen Flottenturbulenz bei Gegenwart von grenzflächenaktiven Substanzen häufig starke Schaumbildung beobachtet, welche den Warentransport innerhalb der Maschine behindert und somit zu Produktionsunterbrüchen führen kann. Hier erweist sich die geringe Schaumtendenz der erfindungsgemäßen Mikroemulsionen als besonders vorteilhaft.

Selbstverständlich können die erfindungsgemäßen Emulsionen in den Anwendungsflotten jederzeit auch in Kombination mit anderen in der Textilausrüstung üblichen Chemikalien, wie z. B. Cellulosevernetzern, Vernetzungskatalysatoren, griffmodifizierenden Polymerdispersionen verschiedenster Provenienz und optischen Aufhellern kombiniert werden.

Die nachstehenden Beispiele erläutern die Erfindung. Die darin angegebenen Viskositätszahlen wurden mit einem Viskosimeter der Firma 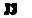 Haake", Karlsruhe, 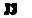 Typ VT 500", Meßkörper SVDIN bei 20°C bestimmt.

### Beispiel 1

21,5 Gramm eines aminoethylaminopropylgruppenhaltigen Organopolysiloxans mit endständigen Trimethylsilylgruppen, einer Viskosität von 2000 mPa*s und einem titrierbaren Stickstoffgehalt von w(N) = 0,35 % wurden in einem 250 ml-Becherglas mit 11,5 Gramm eines Polydimethylsiloxans mit endständigen Trimethylsilylgruppen und einer Viskosität von 12500 mPa*s auf 40°C erwärmt und einige Zeit gerührt. Anschließend wurden unter ständigem Rühren 10 Gramm Isotridecylalkohol mit 6 Ethylenoxideinheiten, 5 Gramm Isotridecylalkohol mit 8 Ethylenoxideinheiten sowie 5 Gramm Polyethylenglykol 1000 zugesetzt und solange weitergerührt, bis eine homogene Mischung entstand (Mischung (A)). In einem zweiten Becherglas wurden 50 Gramm demineralisiertes Wasser und 2 Gramm Essigsäure 60%ig auf 75°C erwärmt (Mischung (B)). In die Mischung (B) wurde unter schnellem Rühren die Mischung (A) eingetragen, wobei eine trübe Emulsion entstand. Diese Mischung wurde 15 - 20 Minuten bei 75°C weitergerührt und anschließend auf 20°C gekühlt. Dabei bildete sich allmählich eine klare Mikroemulsion mit einer Viskosität von etwa 250 mPa*s. In einer Anwendungsflotte zeigte das Produkt auf cellulosischen Fasern eine hervorragende innere Weichheit, gute Alkalistabilität bis zu einem pH-Wert der Flotten bis 9,5 sowie eine hohe Saugfähigkeit der damit ausgerüsteten textilen Substrate.

### Beispiel 2 (Vergleichsbeispiel)

33 Gramm des in Beispiel 1 verwendeten aminoethylaminopropylgruppenhaltigen Organopolysiloxans mit endständigen Trimethylsilylgruppen wurden in einem 250 ml-Becherglas mit 10 Gramm Isotridecylalkohol mit 6 Ethylenoxideinheiten, 5 Gramm Isotridecylalkohol mit 8 Ethylenoxideinheiten sowie 5 Gramm Polyethylenglykol 1000 vermischt, auf 40°C erwärmt und solange weitergerührt, bis eine homogene Mischung entstand (Mischung (A)). In einem zweiten Becherglas wurden 50 Gramm demineralisiertes Wasser und 2 Gramm Essigsäure 60%ig auf 75°C erwärmt (Mischung (B)). In die Mischung (B) wurde unter schnellem Rühren die Mischung (A) eingetragen, wobei zunächst eine viskose, trübe Emulsion entstand. Diese Mischung wurde 15 - 20 Minuten bei 75°C weitergerührt und anschließend auf 20°C gekühlt. Dabei bildete sich allmählich eine klare Mikroemulsion mit einem nichtnewton'schen Viskositätsverhalten. Das so erhaltene hochpastöse Gel ließ sich nur unter Zuhilfenahme mechanischer Rührorgane (Ultra-Turrax) mit Wasser bis zu einer gebrauchsfähigen, dünnflüssigen Emulsion weiterverdünnen.

### Beispiel 3 (Vergleichsbeispiel)

Die gemäß Beispiel 2 bei 75°C zunächst erhaltene viskose, trübe Emulsion wurde bei dieser Temperatur mit 2 ml einer 10%igen wässrigen Lösung von Natriumsulfat versetzt und anschließend auf 20°C gekühlt. Dabei entstand eine dünnflüssige, milchige Emulsion, welche bei der Lagerung bereits nach kurzer Standzeit Phasentrennung und koaleszenzbedingt Abscheidungen von aminoethylaminopropylgruppenhaltigem Organopolysiloxan an der Produktoberfläche aufwies.

### Beispiel 4 (Vergleichsbeispiel)

In die gemäß Beispiel 2 erhaltene, bei 20°C als hochpastöses Gel vorliegende Mikroemulsion wurden unter starkem Rühren 15 g Isopropanol eingetragen, wobei nach 15 - 20 Minuten eine leicht viskose Mikroemulsion entstand. Der Flammpunkt dieser Mischung betrug 18 °C.

### Beispiel 5

14 Gramm des in Beispiel 1 verwendeten aminoethylaminopropylgruppenhaltigen Organopolysiloxans mit endständigen Trimethylsilylgruppen wurden in einem 250 ml-Becherglas mit 7,5 Gramm eines Polydimethylsiloxans mit endständigen Trimethylsilylgruppen und einer Viskosität von 5000 mPa*s auf 40°C erwärmt und einige Zeit gerührt. Anschließend wurden unter beständigem Rühren 5 Gramm Isotridecylalkohol mit 6 Ethylenoxideinheiten, 6 Gramm eines Oxoalkoholes mit 10 Kohlenstoffatomen und 7 Ethylenoxideinheiten sowie 2 Gramm eines Stearylalkoholes mit 25 Ethylenoxideinheiten zugesetzt und solange weitergerührt, bis eine homogene Mischung entstanden ist (Mischung (A)). In einem zweiten Becherglas wurden 65 Gramm demineralisiertes Wasser und 0,9 Gramm Essigsäure 60%ig auf 80°C erwärmt (Mischung (B)). In die Mischung (B) wurde unter schnellem Rühren die Mischung (A) eingetragen, wobei eine viskose, trübe Emulsion entstand. Diese Mischung wurde 30 Minuten bei 80°C weitergerührt. Anschließend wurde die Emulsion unter Rühren auf 30°C abgekühlt, wobei sich eine opale Mikroemulsion mit einer Viskosität von etwa 200 mPa*s bildete.

### Beispiel 6

14 Gramm des in Beispiel 1 verwendeten aminoethylaminopropylgruppenhaltigen Organopolysiloxans mit endständigen Trimethylsilylgruppen wurden in einem 250 ml-Becherglas mit 7,5 Gramm eines Polydimethylsiloxans mit endständigen Trimethylsilylgruppen mit einer Viskosität von 12500 mPa*s auf 35°C erwärmt und einige Zeit gerührt. Anschließend wurden unter beständigem Rühren 4,5 Gramm 2,6,8-Trimethyl-4-nonanol mit 6 Ethylenoxideinheiten sowie 2,8 Gramm eines Isotridecylalkohol mit 5 Ethylenoxideinheiten zugesetzt und solange weitergerührt, bis eine homogene Mischung entstanden ist (Mischung (A)). In einem zweiten Becherglas wurden 70 Gramm demineralisiertes Wasser und 1,5 Gramm Essigsäure 60%ig auf 70°C erwärmt (Mischung (B)). In die Mischung (B) wurde unter schnellem Rühren die Mischung (A) eingetragen, wobei eine viskose, trübe Emulsion entstand. Diese Mischung wurde 30 Minuten bei 70°C weitergerührt. Anschließend wurde die Emulsion unter Rühren auf 30°C abgekühlt, wobei sich eine opale Mikroemulsion mit einer Viskosität von etwa 150 mPa*s bildete.

### Beispiel 7

140 Gramm eines aminoethylaminopropylgruppenhaltigen Organopolysiloxans mit endständigen Trimethylsilylgruppen, einem titrierbaren Stickstoffgehalt von w(N) = 0,8 % und einer Viskosität von ca. 1500 mPa*s, das vom Fachmann nach gängigen Methoden ohne Schwierigkeiten synthetisiert werden kann wurden in einem 1000 ml-Dreihalskolben, versehen mit Flügelrührer und Thermometer mit 75,2 Gramm eines Polydimethylsiloxans mit endständigen Trimethylsilylgruppen und einer Viskosität von 350 mpa*s während 30 Minuten bei 20°C gerührt. Dieser Mischung wurden 5,1 Gramm Ethylencarbonat zugesetzt, zur Vervollständigung der Umsetzung auf 85°C erwärmt und bei dieser Temperatur während 150 Minuten gerührt Anschließend wurden 45 Gramm 2,6,8-Trimethyl-4-nonanol mit 6 Ethylenoxideinheiten und 28 Gramm eines Isotridecylalkohol mit 5 Ethylenoxideinheiten zugegeben und weitergerührt, bis eine homogene Mischung entstand (Mischung (A)). In einem 2500 ml-Becherglas wurden 746 Gramm demineralisiertes Wasser und 6 Gramm Essigsäure 60%ig auf 75°C erwärmt (Mischung (B)). In die Mischung (B) wurde unter schnellem Rühren die Mischung (A) eingetragen, wobei eine viskose, trübe Emulsion entstand. Diese Mischung wurde 30 Minuten bei 70°C weitergerührt. Anschließend wurde die Emulsion unter Rühren auf 30°C abgekühlt, wobei sich eine klare Mikroemulsion mit einer Viskosität von etwa 200 mPa*s bildete. Die Emulsion zeigte in einer Anwendungsflotte bei pH-Werten bis zu 10 eine hohe Scherstabilität, auf cellulosischen Substraten eine gute Vergilbungsbeständigkeit sowie einen weichen Griff mit guter innerer Weichheit bei gleichzeitig hoher Oberflächenglätte.

### Beispiel 8

11 Gramm des in Beispiel 7 verwendeten aminoethylaminopropylgruppenhaltigen Organopolysiloxans mit endständigen Trimethylsilylgruppen wurden in einem 250 ml-Becherglas mit 4,7 Gramm eines Polydimethylsiloxans mit einer Viskosität von 12500 mPa*s auf 40°C erwärmt und einige Zeit gerührt. Anschließend wurden unter beständigem Rühren 3 Gramm Isotridecylalkohol mit 5 Ethylenoxideinheiten und 6 Gramm eines Oxoalkoholes mit 10 Kohlenstoffatomen und 7 Ethylenoxideinheiten zugesetzt und solange weitergerührt, bis eine homogene Mischung entstanden ist (Mischung (A)). In einem zweiten Becherglas wurden 74,8 Gramm demineralisiertes Wasser und 0,65 Gramm Milchsäure auf 80°C erwärmt (Mischung (B)). In die Mischung (A) wurde unter schnellem Rühren die Mischung (B) eingetragen, wobei eine viskose, trübe Emulsion entstand. Diese Mischung wurde 15 Minuten bei 70°C weitergerührt. Anschließend wurde die Emulsion unter Rühren auf 30°C abgekühlt, wobei sich eine wasserklare Mikroemulsion mit einer Viskosität von etwa 150 mPa*s bildete, welche nicht den für essigsäurehaltige Emulsionen typischen Geruch aufwies. Die Emulsion zeigte auf den damit ausgerüsteten textilen, insbesondere cellulosischen Substraten einen guten Weichgriff bei gleichzeitig hoher Oberflächenglätte.

### Anwendungsbeispiele

**1.** Um die Stabilität von Organopolysiloxanemulsionen gegen Alkalien in Ausrüstungsflotten zu prüfen wurde der folgende Test durchgeführt:
Von der zu untersuchenden Organopolysiloxanemulsion wurden 500 ml einer Lösung mit einer Konzentration von 40 g/l in einem 1000 ml Becherglas angesetzt und mit Natriumhydroxidlösung (w(NaOH) = 10 %) auf einen pH-Wert von 9 eingestellt. Anschließend wurde die Flotte zwanzig Minuten mit einem Flügelrührer bei zweitausend Umdrehungen pro Minute gerührt. Nach dem Ablauf dieser Zeit wurde der Rührer abgestellt, der entstandene Schaum zerfallen gelassen und die Flüssigkeitsoberfläche fünfzehn Minuten nach Ausschalten des Rührers hinsichtlich Abscheidungen beurteilt (Tabelle 1).

**Tabelle 1**

| **Emulsion gemäß Beispiel** | **Beurteilung nach 15 Minuten** |
|---|---|
| 1 | keine Abscheidungen |
| 2 (Vergleich) | Ölfilm auf der Oberfläche |
| 3 (Vergleich) | " |
| 4 (Vergleich) | " |
| 5 | keine Abscheidungen |
| 6 | " |
| 7 | " |
| 8 | " |

Bei den Emulsionen, die Abscheidungen aufweisen, besteht in der Textilveredelungspraxis die Gefahr, daß es beim Einschleppen von Alkalien in die Ausrüstungsflotte zu einer Zerstörung der Emulsion kommt und dies zu Walzenbelägen und Flecken auf der Ware führt.
**2.** Abschnitte einer gebleichten, nicht optisch aufgehellten Baumwollwebware wurden mit den in Tabelle 2 aufgeführten Flotten auf einem Foulard mit einer Naßaufnahme von 80 % imprägniert und anschließend 2 Minuten bei 170°C getrocknet. Anschließend wurde der Weißgrad der Muster nach Ganz auf dem Weißgradmeßgerät "texflash 2000" der Firma "datacolor international" (Schweiz) gemessen. Dabei zeigt eine Verringerung des gemessenen Wertes eine Verschlechterung des Weißgrades an.
In Spalte 1, letzte Zeile der Tabelle 2 ist der Weißgrad angegeben, welcher sich durch eine Behandlung ohne Emulsionszusatz zur Anwendungsflotte ergibt (Blindwert).

**Tabelle 2**

| **Emulsion gemäß Beispiel** | **Zusammensetzung der Anwendungsflotte in Gramm** | | | | | | |
|---|---|---|---|---|---|---|---|
| - | 1 | 2 | 3 | 4 | 5 | 6 | 7 |
| 1 | | 20 | | | | | |
| 2 (Vergleich) | | | 20 | | | | |
| 5 | | | | 20 | | | |
| 6 | | | | | 20 | | |
| 7 | | | | | | 20 | |
| 8 | | | | | | | 20 |
| Essigsäure 60 % | 1 | 1 | 1 | 1 | 1 | 1 | 1 |
| Wasser, entmineralisiert | 999 | 979 | 979 | 979 | 979 | 979 | 979 |
| Weißgrad nach Ganz | 187 | 183 | **168** | 177 | 178 | 187 | 180 |

Die gemäß Beispiel 2 (Vergleich) hergestellte Emulsion zeigte eine signifikant höhere Vergilbung auf den ausgerüsteten Gewebeabschnitten aus gebleichter Baumwolle.
**3. a) Foulardverfahren:**
Eine Baumwollmaschenware (200 g/m2) wurde mit einer Flotte, die 30 g/l der nach Beispiel 8 hergestellten Emulsion enthält, foulardiert, auf ca. 80 % Flottenaufnahme abgequetscht und bei 120°C während 10 Minuten getrocknet. Es resultierte ein weicher, angenehm fließender und eleganter Griff des ausgerüsteten textilen Substrats mit hoher innerer Weichheit bei gleichzeitiger Fülle und hoher Oberflächenglätte. Darüberhinaus wies die so ausgerüstete Ware eine hohe Sprungelastizität und verbesserte Entknitterungseigenschaften auf, welche auch nach mehreren Wäschen bei 40°C erhalten geblieben ist.
**3. b) Ausziehverfahren:**
Eine Baumwollmaschenware (200 g/m2) wurde mit 3 % der in Beispiel 1 beschriebenen Mikroemulsion bei einem pH-Wert von ca. 5 und einem Flottenverhältnis von 1:20 während 20 Minuten bei 20 Grad auf dem Laborjet behandelt, abgeschleudert und bei 120°C während 10 Minuten getrocknet. Auf diese Weise wurden ca. 0,4 % Gew.-% der Wirksubstanz aufgebracht. Es resultierte ein weicher, angenehmer, fließender und eleganter Griff des ausgerüsteten textilen Substrats mit hoher innerer Weichheit bei gleichzeitiger Fülle. Darüberhinaus wies die so ausgerüstete Ware eine hohe Sprungelastizität und verbesserte Entknitterungseigenschaften auf.

## Patentansprüche

1. Wäßrige Mikroemulsionen, gekennzeichnet durch einen Gehalt, bezogen auf die Gesamtzusammensetzung, an
(1) 2 bis 60 Gewichtsprozent eines aminofunktionelle Gruppen tragenden Organopolysiloxans des Typs 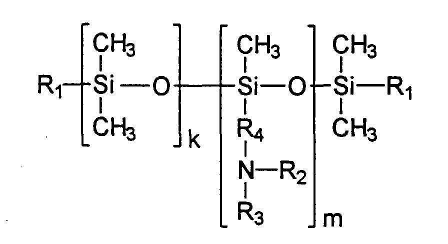 worin
R₁ einen Hydroxy-, Methoxy-, Ethoxy- oder Methylrest,
R₂ Wasserstoff oder einen Alkylenaminrest -R₅-NR₆R₇,
R₃, R₆ und R₇ Wasserstoff oder einen geradkettigen oder verzweigten aliphatischen Alkylrest mit C₁ bis C₂₂ oder Cycloalkylrest mit C₄ bis C₈ oder einen Acyl- oder Hydroxiacylrest mit C₂ bis C₆,
R₄ und R₅ einen geradkettigen oder verzweigten Alkylenrest mit C₂ bis C₂₂ bedeuten,
die Summe von **k** und **m** 25 bis 900 ist, wobei die aminogruppenhaltigen Einheiten innerhalb des Organopolysiloxanes statistisch verteilt sein können und wobei der Stickstoffgehalt dieser Komponente (1) 0,1 bis 2,5 Gewichtsprozent, bezogen auf die Komponente (1) beträgt,
(2) 2 bis 60 Gewichtsprozent eines Dimethylpolysiloxans des Typs 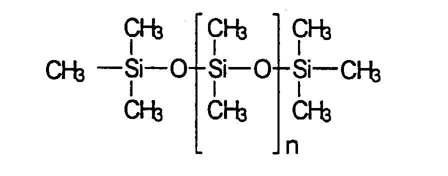 worin
**n** 25 bis 900 bedeutet,
(3) 2 bis 40 Gewichtsprozent eines Emulgators,
(4) 0,2 bis 10 Gewichtsprozent organische oder anorganische Säure,
(5) 20 bis 93,8 Gewichtsprozent Wasser,
und (6) 0 bis 15 Gewichtsprozent eines Hydrotropikums.

2. Verfahren zur Herstellung der Mikroemulsionen gemäß Anspruch 1, wobei man durch Mischen der Komponenten (1), (2) und (3) bei Temperaturen von 20 - 70°C eine Mischung (A) herstellt und wobei man ferner durch Mischen der Komponenten (4), (5) und gegebenenfalls (6) bei Temperaturen von 20 - 90°C eine separate Mischung (B) herstellt und wobei man anschließend die beiden separat hergestellten Mischungen (A) und (B) bei Temperaturen von 20 - 90°C verrührt und auf Temperaturen unterhalb 35°C abkühlt.

3. Verwendung der Mikroemulsionen gemäß Anspruch 1 bei der Veredelung textiler Substrate in wäßrigen Bädern und Anwendungsflotten.
